# EUROPEAN PATENT APPLICATION

(11) **EP 4 329 239 A1**
(43) Date of publication of application: **28.02.2024**
(21) Application number: 21937348.7
(22) Date of filing: 22.04.2021
(51) Int. Cl.: H04L 9/00, G06N 20/00

(54) **FEDERATED LEARNING METHOD AND APPARATUS APPLIED TO MOBILE COMMUNICATION SYSTEM, AND TERMINAL AND MEDIUM**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN); CHEN, Jingran, Dongguan, Guangdong 523860 (CN)
(74) Representative: Taor, Simon Edward William
(86) International application number: PCT/CN2021/089057
(87) International publication number: WO 2022/222110

(57) **Abstract**

Disclosed in the present application are a federated learning method and apparatus applied to a mobile communication system, and a terminal and a medium, which relate to the field of mobile communications. The method comprises: a first node sending a federated learning request to a second node by means of a message in a mobile communication system, wherein the second node is a node having local data in the mobile communication system, and the second node is locally deployed with one sub-model of a federated model; and the first node receiving a calculation result of the second node by means of a message in the mobile communication system, wherein the calculation result is obtained by means of the second node calculating the local data by using the sub-model, the first node is at least one type of a terminal, an access network element, a core network element and an application function entity, the second node is at least one type of the terminal, the access network element, the core network element and the application function entity, and the type of the first node is different from that of the second node.

## Description

### TECHNICAL FIELD

The present application relates to the field of mobile communications, and in particular, to a federated learning method, apparatus, terminal and medium applied to a mobile communication system.

### BACKGROUND

A mobile communication system includes four domains: User Equipment (UE), Radio Access Network (RAN), Core Network (CN), and Application Function (AF), etc. Data analysis in the mobile communication system often requires data collection from different domains, but each domain may be isolated, or each domain may be reluctant to report data about private implementations to other domains.

At this time, how to perform data analysis and protect the data privacy of each domain is a technical problem that needs to be solved urgently.

### SUMMARY

The embodiments of the present application provide a federated learning method, apparatus, terminal and medium applied to a mobile communication system, which can improve the accuracy of auxiliary information. The technical solutions are as follows.

According to an aspect of the present application, a federated learning method applied to a mobile communication system is provided, the method including:
sending, by a first node, a federated learning request to a second node through a message in the mobile communication system, where the second node is a node with local data in the mobile communication system, and the second node is locally deployed with one sub-model in a federated model; and
receiving, by the first node, a calculation result of the second node through a message in the mobile communication system, where the calculation result is obtained by calculating the local data by the second node using the sub-model;
where the first node is at least one of a terminal, an access network element, a core network element, or an application server, the second node is at least one of the terminal, the access network element, the core network element or the application server, and types of the first node and the second node are different.

According to another aspect of the present application, there is provided a federated learning method applied in a mobile communication system, the method including:
receiving, by a second node, a federated learning request sent by a first node through a message in the mobile communication system, where the second node is a node with local data in the mobile communication system, and the second node is locally deployed with one sub-model in a federated model; and
sending, by the second node, a calculation result to the first node through a message in the mobile communication system, where the calculation result is obtained by calculating the local data by the second node using the sub-model;
where the first node is at least one of a terminal, an access network element, a core network element, or an application server, the second node is at least one of the terminal, the access network element, the core network element or the application server, and types of the first node and the second node are different.

According to another aspect of the present application, there is provided a federated learning method applied in a mobile communication system, the method including:
receiving, by an aggregation node, calculation results of at least two second nodes in the mobile communication system, where the second node is a node with local data in the mobile communication system, the second node is locally deployed with one sub-model in a federated model, and the calculation result is obtained by calculating the local data of the second node using the sub-model in the second node; and
sending, by the aggregation node, an aggregation calculation result to a first node in the mobile communication system, where the aggregation calculation result is obtained by aggregating the calculation results of the at least two second nodes.

According to an aspect of the present application, there is provided a federated learning apparatus applied in a mobile communication system, the apparatus including:
a first sending module, configured to send a federated learning request to a second node through a message in the mobile communication system, where the second node is a node with local data in the mobile communication system, and the second node is locally deployed with one sub-model in a federated model;
a first receiving module, configured to receive a calculation result of the second node through a message in the mobile communication system, where the calculation result is obtained by calculating the local data by the second node using the sub-model;
where the apparatus is applied to at least one of a terminal, an access network element, a core network element, or an application server, the second node is at least one of the terminal, the access network element, the core network element or the application server, and types of a network element applied by the apparatus and the second node are different.

According to an aspect of the present application, there is provided a federated learning apparatus applied in a mobile communication system, the apparatus including:
a second receiving module, configured to receive a federated learning request sent by a first node through a message in the mobile communication system, where the second node is a node with local data in the mobile communication system, and the second node is locally deployed with one sub-model in a federated model; and
a second sending module, configured to send a calculation result to the first node through a message in the mobile communication system, where the calculation result is obtained by calculating the local data by the second node using the sub-model;
where the first node is at least one of a terminal, an access network element, a core network element, or an application server, the apparatus is applied to at least one of the terminal, the access network element, and the core network element or the application server, and types of the first node and a network element applied by the apparatus are different.

According to an aspect of the present application, there is provided a federated learning apparatus applied in a mobile communication system, the apparatus including:
a third receiving module, configured to receive calculation results of at least two second nodes in the mobile communication system, where the second node is a node with local data in the mobile communication system, the second node is locally deployed with one sub-model in a federated model, and the calculation result is obtained by calculating the local data of the second node using the sub-model in the second node; and
a third sending module, configured to send an aggregation calculation result to a first node in the mobile communication system, where the aggregation calculation result is obtained by aggregating the calculation results of the at least two second nodes.

According to an aspect of the present application, a terminal or a network element device is provided, the terminal or network element device includes: a processor; a transceiver connected to the processor; and a memory for storing executable instructions for the processor; where the processor is configured to load and execute the executable instructions to implement the federated learning method applied to the mobile communication system as described in the above aspects.

According to an aspect of the present application, a computer-readable storage medium is provided, executable instructions are stored in the computer-readable storage medium, and the executable instructions are loaded and executed by a processor to implement the federated learning method applied to the mobile communication system as described in the above aspects.

According to one aspect of the present application, there is provided a computer program product or computer program, the computer program product or computer program includes computer instructions stored in a computer-readable storage medium, a processor of the computer device reads the computer instructions from the computer-readable storage medium, and the processor executes the computer instructions, so that the computer device executes the federated learning method applied to the mobile communication system described in the above aspects.

According to an aspect of the present application, a chip is provided, the chip includes a programmable logic circuit or a program, and the chip is used for implementing the federated learning method applied to the mobile communication system as described in the above aspects.

The technical solutions provided by the embodiments of the present application include at least the following beneficial effects.

By sending the federated learning request and the calculation result between different nodes in the mobile communication system using the message in the mobile communication system, on the premise of guaranteeing data privacy between nodes in different domains, data in different domains are fused through the message in the mobile communication system, and data analysis is performed by using the federated model, thereby improving the data analysis capability of the mobile communication system.

### BRIEF DESCRIPTION OF THE DRAWINGS

In order to illustrate the technical solutions in the embodiments of the present application more clearly, the following briefly introduces the drawings that are used in the description of the embodiments. Obviously, the drawings in the following description are only some embodiments of the present application. For those of ordinary skill in the art, other drawings can also be obtained from these drawings without creative effort.
FIG. 1 is a schematic diagram of a vertical federated learning provided by an exemplary embodiment of the present application;
FIG. 2 is a schematic diagram of a mobile communication system provided by an exemplary embodiment of the present application;
FIG. 3 is a schematic diagram of a mobile communication system provided by an exemplary embodiment of the present application;
FIG. 4 is a flowchart of a federated learning method applied to a mobile communication system provided by an exemplary embodiment of the present application;
FIG. 5 is a flowchart of a federated learning method with a core network element as a first node provided by an exemplary embodiment of the present application;
FIG. 6 is a schematic diagram of using a core network element as the first node provided by an exemplary embodiment of the present application;
FIG. 7 is a flowchart of a federated learning method with a core network element as the first node provided by an exemplary embodiment of the present application;
FIG. 8 is a flowchart of a federated learning method with an AS as the first node provided by an exemplary embodiment of the present application;
FIG. 9 is a schematic diagram of using the AS as the first node provided by an exemplary embodiment of the present application;
FIG. 10 is a flowchart of a federated learning method with the AS as the first node provided by an exemplary embodiment of the present application;
FIG. 11 is a flowchart of a federated learning method with a UE as the first node provided by an exemplary embodiment of the present application;
FIG. 12 is a schematic diagram of using the UE as the first node provided by an exemplary embodiment of the present application;
FIG. 13 is a flowchart of a federated learning method with the UE as the first node provided by an exemplary embodiment of the present application;
FIG. 14 is a flowchart of a federated learning method with an access network element as the first node provided by an exemplary embodiment of the present application;
FIG. 15 is a flowchart of a federated learning method applied to a mobile communication system provided by an exemplary embodiment of the present application;
FIG. 16 is a structural block diagram of a federated learning apparatus applied to a mobile communication system provided by an exemplary embodiment of the present application;
FIG. 17 is a structural block diagram of a federated learning apparatus applied to a mobile communication system provided by an exemplary embodiment of the present application;
FIG. 18 is a structural block diagram of a federated learning apparatus applied to a mobile communication system provided by an exemplary embodiment of the present application;
FIG. 19 is a schematic structural diagram of a communication system provided by an exemplary embodiment of the present application.

### DETAILED DESCRIPTION

In order to make the objectives, technical solutions and advantages of the present application clearer, the embodiments of the present application will be further described in detail below with reference to the accompanying drawings.

First, some terms involved in the embodiments of the present application are briefly introduced:
**Federated learning:** In the case of ensuring that the data is not out of the domain, it trains a machine learning model by combining data sources from a plurality of participants and provides a model inference service. While protecting user privacy and data security, the federated learning can make full use of the data sources of a plurality of participants to improve the performance of the machine learning model. The federated learning enables data collaboration across departments, companies, and even industries, while meeting the requirements of data protection laws and regulations.

The federated learning can be divided into three categories: Horizontal Federated Learning, Vertical Federated Learning, and Federated Transfer Learning.

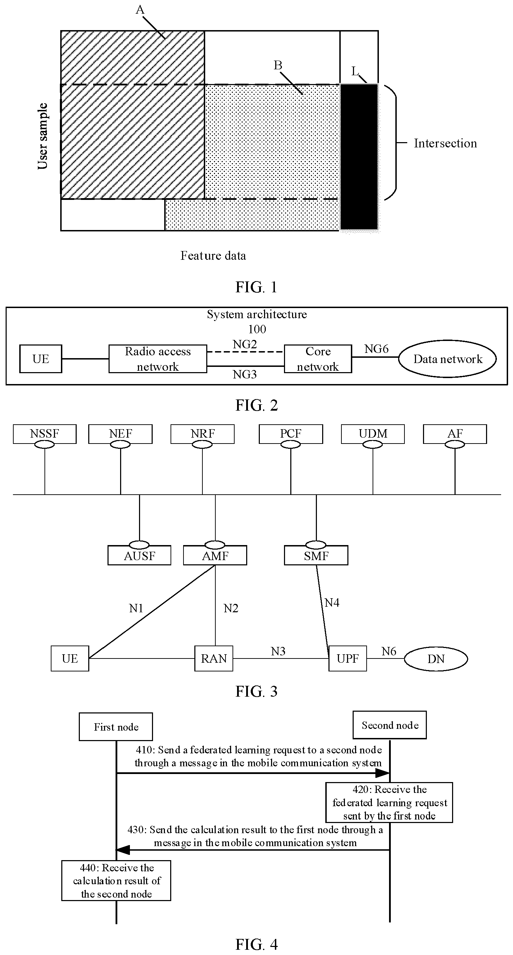

**Vertical federated learning:** It is a federated learning when the training sample identifications (IDs) of the participants overlap more and the data features overlap less. For example, the bank and the e-commerce company in the same region have different feature data of the same customer A, for example, the bank has the financial data of the customer A, and the e-commerce company has the shopping data of the customer A. The word "vertical" comes from the "vertical partitioning" of the data. As shown in FIG. 1, the federated learning is performed by combining different feature data of user samples with intersections in a plurality of participants A and B, that is, the training samples of each participant are divided vertically.

**Homomorphic encryption:** It is a cryptographic technique based on the computational complexity theory of mathematical problems. The homomorphically encrypted data is processed to obtain an output, and the result of decrypting this output is the same as an output result obtained by processing the unencrypted raw data in the same way.

FIG. 2 shows a schematic diagram of an architecture of a communication system provided by an exemplary embodiment of the present application. As shown in FIG. 2, the system architecture 100 may include: UE, RAN, CN and Data Network (DN). Among them, the UE, RAN, and CN are the main components of the architecture. Logically, they can be divided into two parts: the user plane and the control plane. The control plane is responsible for the management of the mobile network, and the user plane is responsible for the transmission of service data. In FIG. 2, the NG2 reference point is located between the RAN control plane and the CN control plane, the NG3 reference point is located between the RAN user plane and the CN user plane, and the NG6 reference point is located between the CN user plane and the data network.

UE: It is the portal for mobile users to interact with the network. It can provide basic computing capabilities and storage capabilities, display service windows to users, and accept user operation input. The UE may establish a signal connection and a data connection with the RAN using the next-generation air interface technology, thereby transmitting control signals and service data to the mobile network.

RAN: Similar to the base station in the traditional network, it is deployed close to the UE to provide network access functions for authorized users within the cell coverage area, and can transmit user data using transmission tunnels of different qualities according to user levels and service requirements. The RAN can manage its own resources, utilize them rationally, provide access services for the UE on demand, and forward control signals and user data between the UE and the core network.

CN: It is responsible for maintaining the subscription data of the mobile network, managing the network elements of the mobile network, and providing functions such as session management, mobility management, policy management, and security authentication for the UE. When the UE is attached, it provides network access authentication for the UE; when the UE has a service request, it allocates network resources for the UE; when the UE moves, it updates the network resources for the UE; when the UE is idle, it provides a fast recovery mechanism for the UE; when the UE is detached, it releases network resources for the UE; when the UE has service data, it provides data routing functions for the UE, such as forwarding uplink data to the DN; or receiving the UE downlink data from the DN, forwarding it to the RAN, thereby sending it to the UE.

DN: It is a data network that provides business services for users. Generally, the client is located in the UE, and the server is located in the data network. The data network may be a private network, such as a local area network, or an external network that is not controlled by operators, such as the Internet, or a proprietary network jointly deployed by operators, such as for configuring Internet Protocol (IP) Multimedia Core Network Subsystem (IMS) service.

FIG. 3 is a detailed architecture determined on the basis of FIG. 2, where the core network user plane includes a User Plane Function (UPF); the core network control plane includes an Authentication Server Function (AUSF), an Access and Mobility Management Function (AMF), a Session Management Function (SMF), a Network Slice Selection Function (NSSF), a Network Exposure Function (NEF), a NF Repository Function (NRF), a Unified Data Management (UDM), a Policy Control Function (PCF), and an AF. The functions of these functional entities are as follows:
UPF: performing user data packet forwarding according to a routing rule of SMF;
AUSF: performing security authentication of the UE;
AMF: UE access and mobility management;
SMF: UE session management;
NSSF: selecting a network slice for UE;
NEF: opening the network function to the third party in the form of Application Programming Interface (API) interface;
NRF: providing a storage function and selection function of network function entity information for other network elements;
UDM: user subscription context management;
PCF: user policy management;
AF: user application management.

In the architecture shown in FIG. 3, the N1 interface is the reference point between the UE and the AMF; the N2 interface is the reference point between the RAN and the AMF, used for sending Non-Access-Stratum (NAS) messages, etc.; the N3 interface is the reference point between the RAN and the UPF, which is used to transmit data on the user plane, etc.; the N4 interface is the reference point between the SMF and the UPF, which is used to transmit, for example, the tunnel identification information of the N3 connection, the data buffer indication information, and downlink data notification messages and other information; the N6 interface is the reference point between the UPF and the DN, and is used to transmit data on the user plane. NG interface is an interface between the radio access network and the 5G core network.

It should be noted that the names of the interfaces between individual network elements in FIG. 2 and FIG. 3 are just examples, and the name of the interface in the specific implementation may be other names, which are not specifically limited in the embodiments of the present application. The name of each network element (such as SMF, AF, UPF, etc.) included in FIG. 2 and FIG. 3 is also only an example, and does not limit the function of the network element itself. In 5GS and other future networks, the above-mentioned network elements may also have other names, which are not specifically limited in the embodiments of the present application. For example, in a 6G network, some or all of the above-mentioned network elements may use the terminologies in 5G, and may also use other names, etc., which is uniformly described here, and will not be repeated below. In addition, it should be understood that the names of the messages (or signaling) transmitted between the above network elements are only an example, and do not constitute any limitation on the functions of the messages themselves.

FIG. 4 shows a flowchart of a federated learning method applied to a mobile communication system provided by an exemplary embodiment of the present application. The method includes the following steps.

In **step 410**: a first node sends a federated learning request to a second node through a message in the mobile communication system.

The first node (also called a master node or a tag node) is a node with a sample tag, or the first node is a user of a calculation result.

The second node (also called a participating node or a computing node) is a node with local data in the mobile communication system, and the second node is locally deployed with one sub-model in a federation model. Exemplarily, the number of second nodes is *n,* the federated model includes *n* sub-models, and the second nodes are in one-to-one correspondence with the sub-models. Exemplarily, there are *n* second nodes and one first node, the federated model includes *n*+1 sub-models, the *n* second nodes correspond to *n* sub-models one-to-one, and the first node corresponds to one sub-model.

Optionally, the first node sends a federated learning request to the second node through a NAS message. For example, the NAS message includes a user configuration update (UEConfigurationUpdate) message. Optionally, the first node sends a federated learning request to the second node through a user plane message.

In the case that there are at least two second nodes, the first node sends the federated learning request to the at least two second nodes respectively.

In one example, the federated learning request carries model information of the sub-model. Since the sub-models in different second nodes are the same or different, for the *i*^{th} second node, the *i*^{th} federated learning request sent by the first node to the *i*^{th} second node carries information of the sub-model in the *i*^{th} second node. Optionally, the model information of the sub-model includes at least one of: a model type, a parameter type and number in the model, a type and number of layers of a neural network layer in the model, a type and parameter of a neural network kernel in the model, a topology result of the neural network layer in the model, or an initialization parameter of the model, where *i* is an integer not greater than *n.*

In one example, the federated learning request carries model information of the sub-model. Since the sub-models in different second nodes are the same or different, for the *i*^{th} second node, the *i*^{th} federated learning request sent by the first node to the *i*^{th} second node carries information of the sub-model in the *i*^{th} second node. Optionally, the model information of the sub-model includes at least one of: a model type, a parameter type and number in the model, a type and number of layers of a neural network layer in the model, a type and parameter of a neural network kernel in the model, a topology result of the neural network layer in the model, or an initialization parameter of the model.

In one example, the federated learning request carries demand information of local data. Due to the different types of local data in different second nodes, for the *i*^{th} second node, the *i*^{th} federated learning request sent by the first node to the *i*^{th} second node carries demand information of local data in the *i*^{th} second node. Optionally, the demand information of the local data includes at least one of a data type of the local data, a data format of the local data, or a valid range of the local data. The valid range is divided according to dimensions such as time, location, and signal source.

In **step 420:** the second node receives the federated learning request sent by the first node through a message in the mobile communication system.

Optionally, the second node receives the federated learning request sent by the first node through a NAS message. Alternatively, the second node receives the federated learning request sent by the first node through a user plane message.

During the training stage of the federated model, the second node obtains the model parameter of the sub-model from the federated learning request. During the training stage and/or the inference stage of the federated model, the second node obtains demand information of local data from the federated learning request.

The second node performs federated learning according to the federated learning request.

In the training stage of the federated model, the second node builds a sub-model according to the model parameter of the sub-model, and calculates the local data indicated by the demand information using the sub-model to obtain the calculation result; in the inference stage of the federated model, the trained sub-model is used to calculate the local data indicated by the demand information to obtain the calculation result.

In **step 430:** the second node sends the calculation result to the first node through a message in the mobile communication system.

In **step 440:** the first node receives the calculation result of the second node through a message in the mobile communication system.

To sum up, the method provided in the embodiment sends the federated learning request and the calculation result between different nodes in the mobile communication system using the message in the mobile communication system, so that on the premise of guaranteeing data privacy between nodes in different domains, data in different domains are fused through the message in the mobile communication system, and data analysis is performed by using the federated model, thereby improving the data analysis capability of the mobile communication system.

Exemplarily, the first node is at least one of a terminal, an access network element, a core network element, or an AS, the second node is at least one of a terminal, an access network element, a core network element, or an AS, and the first node and the second node are of different types.

**For the case where the first node includes a core network element:**

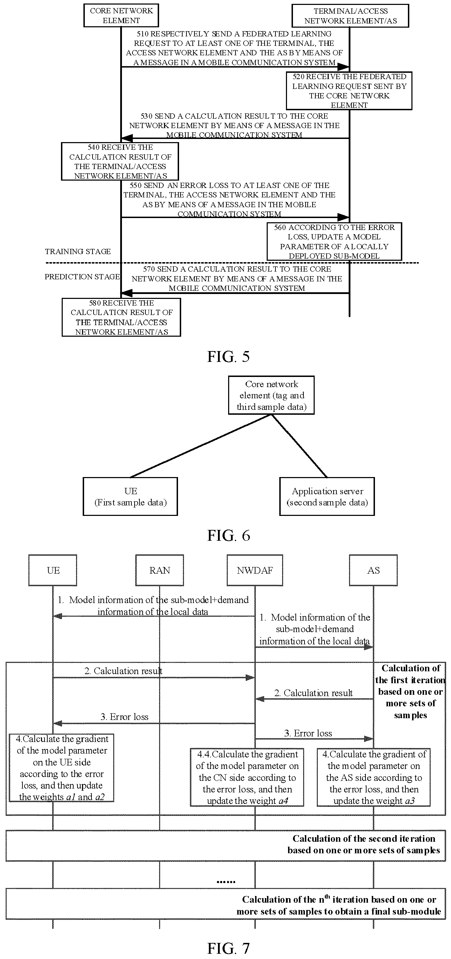

FIG. 5 shows a flowchart of a federated learning method applied to a mobile communication system provided by an exemplary embodiment of the present application. The method includes the following steps.

### The training stage of the federated model:

In **step 510:** the core network element sends a federated learning request to at least one of the terminal, the access network element or the AS respectively through a message in the mobile communication system.

In the case where the second node includes a terminal, the core network element sends a first federated learning request to the terminal through a NAS message or a user plane message, and the first federated learning request carries model information of a sub-model on the terminal side, and/or, demand information of local data on the terminal side.

In the case where the second node includes an access network element, the core network element sends a second federated learning request to the access network element through an NG2 message or an NG3 message, and the second federated learning request carries model information of the sub-model on the access network element side, and/or the demand information of the local data on the access network element side.

In the case where the second node includes the AS, the core network element sends a third federated learning request to the AS through a first API interface or a user plane connection, and the third federated learning request carries the model information of the sub-model on the AS side, and/or, the demand information of local data on the AS side. Optionally, the first API interface includes an API provided by the AS to the core network element, and/or an API provided by the core network element to the AS.

In this embodiment, it is exemplified that the second node includes a terminal, an access network element, and an AS at the same time.

In **step 520:** the terminal/access network element/AS receives the federated learning request sent by the core network element through a message in the mobile communication system.

The terminal receives the first federated learning request sent by the core network element through the NAS message or the user plane message, and the first federated learning request carries model information of the sub-model on the terminal side and/or demand information of local data on the terminal side.

The access network element receives the second federated learning request sent by the core network element through the NG2 message or the NG3 message, and the second federated learning request carries the model information of the sub-model on the access network element side, and/or the demand information of local data on the access network element side.

The AS receives the third federated learning request sent by the core network element through the first API interface or the user plane connection, and the third federated learning request carries the model information of the sub-model on the AS side and/or the demand information of local data on the AS side.

Exemplarily, in the training stage of the federated model, the terminal/access network element/AS obtains the model parameter of the sub-model and/or the demand information of local data from the federated learning request. The terminal/access network element/AS performs federated learning according to the federated learning request. The terminal/access network element/AS constructs the sub-model according to the model parameter of the sub-model, and calculates the local data indicated by the demand information using the sub-model to obtain the calculation result.

In **step 530:** the terminal/access network element/AS sends the calculation result to the core network element through a message in the mobile communication system.

The terminal sends a first calculation result to the core network element through the NAS message or the user plane message, and the first calculation result is obtained by calculating the local data on the terminal side by using the sub-model on the terminal side.

The access network element sends a second calculation result to the core network element through the NG2 message or the NG3 message, and the second calculation result is obtained by calculating the local data on the access network element side using the sub-model on the access network element side.

The AS sends a third calculation result to the core network element through the first API interface or the user plane connection, and the third calculation result is obtained by calculating the local data on the AS side by using the sub-model on the AS side.

Exemplarily, in the training stage of the federated model, the terminal/access network element/AS obtains the model parameter of the sub-model and/or the demand information of local data from the federated learning request. The terminal/access network element/AS performs federated learning according to the federated learning request. The terminal/access network element/AS constructs the sub-model according to the model parameter of the sub-model, and calculates the local data indicated by the demand information using the sub-model to obtain the calculation result.

In **step 540:** the core network element receives the calculation result sent by the terminal/access network element/AS through a message in the mobile communication system.

The core network element receives the first calculation result sent by the terminal through the NAS message or the user plane message, and the first calculation result is obtained by calculating the local data on the terminal side by using the sub-model on the terminal side.

The core network element receives the second calculation result sent by the access network element through the NG2 message or the NG3 message, and the second calculation result is obtained by calculating the local data on the access network element side using the sub-model on the access network element side.

The core network element receives the third calculation result sent by the AS through the first API interface or the user plane connection, and the third calculation result is obtained by calculating the local data on the AS side using the sub-model on the AS side.

In **step 550:** the core network element sends an error loss to at least one of the terminal, the access network element or the AS through a message in the mobile communication system.

The core network element includes a sample tag, and the sample tag comes from data stored by the core network element itself, or the sample tag is obtained by the core network element from another core network element.

The core network element sends a first error loss to the terminal through the NAS message or the user plane message, where the first error loss is an error loss of the first calculation result relative to the sample tag.

The core network element sends a second error loss to the access network element through the NG2 message or the NG3 message, where the second error loss is an error loss of the second calculation result relative to the sample tag.

The core network element sends a third error loss to the AS through the first API interface or the user plane connection, where the third error loss is an error loss of the third calculation result relative to the sample tag.

In **step 560:** the terminal/access network element/AS updates the model parameter of the locally deployed sub-model according to the error loss.

The terminal updates the model parameter of the locally deployed sub-model according to the first error loss, where the first error loss is the error loss of the first calculation result relative to the sample tag.

The access network element updates the model parameter of the locally deployed sub-model according to the second error loss, where the second error loss is the error loss of the second calculation result relative to the sample tag.

The AS updates the model parameter of the locally deployed sub-model according to the third error loss, where the third error loss is the error loss of the third calculation result relative to the sample tag.

Optionally, the first node also has its own local data, and the first node is locally deployed with one sub-model in the federated model. The first node calculates the local data of the first node using the sub-model of the first node to obtain a local calculation result; the first node calculates a local error loss of the local calculation result relative to the sample tag; the first node updates the model parameter of the sub-model in the first node using the local error loss. That is, the core network element trains the sub-model of the core network element using the local data of the core network element to obtain the local calculation result; the core network element calculates the local error loss of the local calculation result relative to the sample tag; the core network element updates the model parameter of the sub-model in the core network element using the local error loss.

**After one or more update iterations,**
**the inference stage of the federated model:**
In **step 570:** the terminal/access network element/AS sends the calculation result to the core network element through a message in the mobile communication system.

After training of the federated model is completed, the second node executes the prediction process by itself, or the second node executes the prediction process after receiving the federated learning request sent by the first network element.

In the case where the second node includes a terminal, the terminal sends a first calculation result to the core network element through a NAS message or a user plane message, and the first calculation result is obtained by calculating local data on the terminal side using the sub-model on the terminal side.

In the case where the second node includes an access network element, the access network element sends a second calculation result to the core network element through an NG2 message or an NG3 message, and the second calculation result is obtained by calculating the local data on the access network element side using the sub-model on the access network element side.

In the case where the second node includes an AS, the AS sends a third calculation result to the core network element through the first API interface or the user plane connection, and the third calculation result is obtained by calculating the local data on the AS side using the sub-model on the AS side.

In **step 580:** the core network element receives the calculation result sent by the terminal/access network element/AS through a message in the mobile communication system.

The core network element summarizes the received calculation results to obtain the final calculation result of the federated model, and performs the subsequent operation according to the final calculation result. Optionally, the federation model includes a model related to QoS information.

To sum up, the method provided in this embodiment sends the federated learning request and the calculation result between different nodes in the mobile communication system using the message in the mobile communication system, so that on the premise of guaranteeing data privacy between nodes in different domains, data in different domains are fused through the message in the mobile communication system, and data analysis is performed by using the federated model, thereby improving the data analysis capability of the mobile communication system.

Illustratively, as shown in FIG. 6, taking the core network element being the Network Data Analytics Function (NWDAF) as an example, vertical federated learning needs to be performed among the UE, the NWDAF and the AS. NWDAF is the tag owner. The UE has the first sample data, the AS has the second sample data, and the NWDAF has the third sample data.

Exemplarily, the sample tag owned by the NWDAF includes: a transmission delay, and each network element has different influence parameters corresponding to the transmission delay. As shown in Table 1 below (the same UE can have a plurality sets of different sample data):

**Table 1**

| | UE | AS | NWDAF | Tag |
|---|---|---|---|---|
| Sample data 1 | Speed 100km/h, quantity of electricity 50% | Using application *a* | GBR=40mbps | Transmission delay =50ms |
| Sample data 2 | Speed 200km/h, quantity of electricity 70% | Using application *b* | GBR=50mbps | Transmission delay =20ms |
| Sample data 3 | Speed 300km/h, quantity of electricity 20% | Using application *c* | GBR=30mbps | Transmission delay =30ms |
| ...... | ...... | ...... | ...... | ...... |
| Sample data n | Speed 150km/h, quantity of electricity 20% | Using application *b* | GBR=20mbps | Transmission delay=20ms |

| | | | | |
|---|---|---|---|---|
| Note 1: Guaranteed Bit Rate (GBR) and transmission delay are data on the core network side. NWDAF may collect this data from other core network element(s) for training. | | | | |

It is assumed that the federated model y=*a*1x1+*a*2x2+*a*3x3+*a*4x4, y is the calculation result, x1 and x2 are the speed and value of quantity of electricity of the UE, x3 is the application the UE is using, and x4 is the GBR value allocated by the core network to the UE. And the tag yt is used to calculate the error loss with y calculated by the federated model.

Due to the data confidentiality requirement, the sample data of the UE and the AS cannot be sent to the NWDAF (the NWDAF can only obtain the data of the core network). For each set of sample data, the UE calculates *a*1×1+*a*2×2 locally, the AS calculates *a*3×3 locally, and then they send the respective calculation results to the NWDAF. The NWDAF can summarize the calculation results to obtain the value of the calculation result y=*a*1×1+*a*2×2+*a*3×3+*a*4×4, and compare this calculation result with the tag yt to calculate the error loss, and the NWDAF then returns the error loss to each node to calculate the gradient of the weight *a* in each sub-model as the error loss, thereby adjusting the weight *a*. In this way, one or more sets of sample data are used for calculation according to this method, and the gradient is continuously calculated to adjust the weight *a*, so as to obtain the final federated model y=*a*1×1+*a*2×2+*a*3×3+*a*4×4.

As shown in FIG. 7, the method includes the following steps.

In **step 1:** NWDAF sends the model information of the sub-model and the demand information of local data to the UE and AS respectively.

As the owner of the tag, NWDAF sends the federated learning request to UE and AS respectively. The federated learning request contains the model information of the sub-model and the demand information of local data.

Exemplarily, the model information of the sub-model includes: a model to be calculated by the current node, which may be a simple linear relationship model, or a more complex multi-layer neural network model, such as Deep Neural Networks (DNN).

Exemplarily, the demand information of local data (also called input parameter information) includes: a parameter that the current node needs to input, for example, for *a*1×1+*a*2×2 model sent to the UE, x1 and x2 are two input parameters, corresponding to the speed and the value of quantity of electricity that can be collected on the UE side.

NWDAF may send the first federated learning request to the terminal through a NAS message, and the NAS message may be a UE configuration update (UEConfigurationUpdate), or it sends the first federated learning request to the terminal through a user plane message.

In **step 2:** UE and AS send calculation results to NWDAF.

The UE and the AS respectively calculate and obtain the calculation results (*a*1x1+*a*2x2 and *a*3x3) according to their respective models and input parameters, and send them to NWDAF.

In **step 3:** NWDAF sends an error loss to UE and AS respectively.

NWDAF calculates the local calculation result *a*4x4 according to its own local data and the locally deployed sub-model, adds the results obtained from the three calculation results to obtain y=*a*1x1+*a*2x2+*a*3x3+*a*4x4, and calculates the error loss using the comparison between y and yt, and then sends the error loss to UE and AS.

In **step 4:** UE calculates the gradient of the model parameter on the UE side according to the error loss, and then updates the weights *a1* and *a2*; NWDAF calculates the gradient of the model parameter on the NWDAF side according to the error loss, and then updates the weight *a3*; AS calculates the gradient of the model parameter on the AS side according to the error loss, and then updates the weight *a4.*

Each node calculates the gradient by itself, and then updates the value of its own weight *a*. This completes one iterative calculation. After several iterative calculations, the trained sub-model is obtained.

For the case where the first node includes an AS:

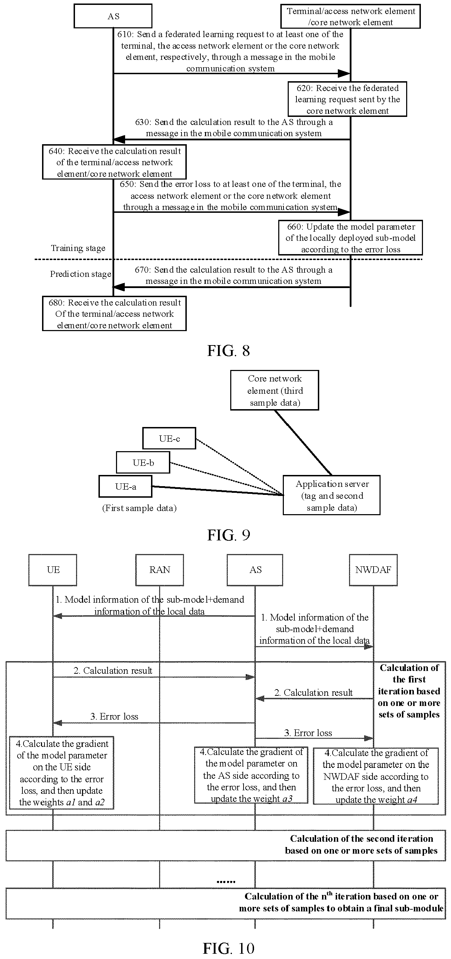

FIG. 8 shows a flowchart of a federated learning method applied to a mobile communication system provided by an exemplary embodiment of the present application. The method includes the following steps.

**The training stage of the federated model:**
In **step 610:** AS sends a federated learning request to at least one of the terminal, the access network element or the core network element, respectively, through a message in the mobile communication system.

When the second node includes the terminal, the AS sends the first federated learning request to the terminal through the application layer connection of the user plane, and the first federated learning request carries the model information of the sub-model on the terminal side, and/or the demand information of local data on the terminal side. Exemplarily, the application layer connection of the user plane includes: HyperText Transfer Protocol (HTTP).

In the case where the second node includes an access network element, the AS sends a second federated learning request to the access network element through the second API interface, and the second federated learning request carries the model information of the sub-model on the access network element side, and/or demand information of local data on the access network element side. Optionally, the second API interface includes an API provided by the AS to the access network element, and/or an API provided by the access network element to the AS.

In the case where the second node includes a core network element, the AS sends a fourth federated learning request to the core network element through the first API interface or the user plane connection, and the fourth federated learning request carries model information of the sub-model on the core network element side, and/or demand information of local data on the core network element side.

In **step 620:** the terminal/access network element/core network element receives the federated learning request sent by the AS through a message in the mobile communication system.

The terminal receives the first federated learning request from the AS through the application layer connection of the user plane. The first federated learning request carries model information of the sub-model on the terminal side and/or demand information of local data on the terminal side.

The access network element receives the second federated learning request from the AS through the second API interface, and the second federated learning request carries the model information of the sub-model on the access network element side, and/or the demand information of the local data on the access network element side.

The core network element receives the fourth federated learning request from the AS through the first API interface or the user plane connection, and the fourth federated learning request carries the model information of the sub-model on the core network element side, and/or the demand information of local data on the core network element side.

Exemplarily, in the training stage of the federated model, the terminal/access network element/core network element obtains the model parameter of the sub-model and/or the demand information of the local data from the federated learning request. The terminal/access network element/core network element performs federated learning according to the federated learning request. The terminal/access network element/core network element constructs the sub-model according to the model parameter of the sub-model, and calculates the local data indicated by the demand information using the sub-model to obtain the calculation result.

In **step 630:** the terminal/access network element/core network element sends the calculation result to the AS through a message in the mobile communication system.

The terminal sends the first calculation result to the AS through the application layer connection of the user plane, and the first calculation result is obtained by calculating the local data on the terminal side by using the sub-model on the terminal side.

The access network element sends the second calculation result to the AS through the second API interface, and the second calculation result is obtained by calculating the local data on the access network element side by using the sub-model on the access network element side.

The core network element sends a fourth calculation result to the AS through the first API interface or the user plane connection, and the fourth calculation result is obtained by calculating the local data on the core network element side by using the sub-model on the core network element side.

Exemplarily, in the training stage of the federated model, the terminal/access network element/core network element obtains the model parameter of the sub-model and/or the demand information of local data from the federated learning request. The terminal/access network element/core network element performs federated learning according to the federated learning request. The terminal/access network element/core network element constructs the sub-model according to the model parameter of the sub-model, and calculates the local data indicated by the demand information using the sub-model to obtain the calculation result.

In **step 640:** the AS receives the calculation result sent by the terminal/access network element/core network element through a message in the mobile communication system.

The AS receives the first calculation result sent by the terminal through the application layer connection of the user plane, and the first calculation result is obtained by calculating the local data on the terminal side by using the sub-model on the terminal side.

The AS receives the second calculation result sent by the access network element through the second API interface, and the second calculation result is obtained by calculating the local data on the access network element side by using the sub-model on the access network element side.

The AS receives the fourth calculation result sent by the core network element through the first API interface or the user plane connection, and the fourth calculation result is obtained by calculating the local data on the core network element side by using the sub-model on the core network element side.

In **step 650:** the AS sends the error loss to at least one of the terminal, the access network element or the core network element through a message in the mobile communication system respectively.

The AS is the owner of the sample tag.

The AS sends a first error loss to the terminal through the application layer connection of the user plane, where the first error loss is the error loss of the first calculation result relative to the sample tag.

The AS sends a second error loss to the access network element through the second API interface, where the second error loss is the error loss of the second calculation result relative to the sample tag.

The AS sends a fourth error loss to the core network element through the first API interface or the user plane connection, where the fourth error loss is the error loss of the fourth calculation result relative to the sample tag.

In **step 660:** the terminal/access network element/core network element updates the model parameter of the locally deployed sub-model according to the error loss.

The terminal updates the model parameter of the locally deployed sub-model according to the first error loss, where the first error loss is the error loss of the first calculation result relative to the sample tag.

The access network element updates the model parameter of the locally deployed sub-model according to the second error loss, where the second error loss is the error loss of the second calculation result relative to the sample tag.

The core network element updates the model parameter of the locally deployed sub-model according to the fourth error loss, where the fourth error loss is the error loss of the fourth calculation result relative to the sample tag.

Optionally, the first node also has its own local data, and the first node is locally deployed with one sub-model in the federated model. The first node calculates the local data of the first node using the sub-model of the first node to obtain the local calculation result; the first node calculates the local error loss of the local calculation result relative to the sample tag; the first node updates the model parameter of the sub-model in the first node using the local error loss. That is, the AS trains the sub-model of the AS using the local data of the AS to obtain the local calculation result; the AS calculates the local error loss of the local calculation result relative to the sample tag; the AS updates the model parameter of the sub-model in the AS using the local error loss.

**After one or more update iterations,**
**the inference stage of the federated model:**
In **step 670:** the terminal/access network element/core network element sends the calculation result to the AS through a message in the mobile communication system.

After the federated model is trained, the second node executes the prediction process by itself, or the second node executes the prediction process after receiving the federated learning request sent by the first network element.

In the case where the second node includes the terminal, the terminal sends the first calculation result to the AS through the application layer connection of the user plane, and the first calculation result is obtained by calculating the local data on the terminal side by using the sub-model on the terminal side.

In the case where the second node includes an access network element, the access network element sends a second calculation result to the AS through the second API interface, and the second calculation result is obtained by calculating the local data on the access network element side using the sub-model on the access network element side.

In the case where the second node includes a core network element, the core network element sends a fourth calculation result to the AS through the first API interface or the user plane connection, and the fourth calculation result is obtained by calculating the local data on the core network element side by using the sub-model on the core network element side.

In **step 680:** the AS receives the calculation result sent by the terminal/access network element/core network element through a message in the mobile communication system.

The AS aggregates the received calculation results to obtain the final calculation result of the federated model, and performs the subsequent operation according to the final calculation result. Optionally, the federated model includes an application-related model.

To sum up, the method provided in this embodiment sends the federated learning request and the calculation result between different nodes in the mobile communication system using the message in the mobile communication system, so that on the premise of guaranteeing data privacy between nodes in different domains, data in different domains are fused through the message in the mobile communication system, and data analysis is performed by using the federated model, thereby improving the data analysis capability of the mobile communication system.

Exemplarily as shown in FIG. 9, vertical federated learning needs to be performed among the UE, NWDAF and AS. The AS is the tag owner. A plurality of UEs own the first sample data, the AS owns the second sample data, and the NWDAF owns the third sample data.

Exemplarily, the sample tag owned by the AS is a tag unique to the application layer, such as a user's service experience score. Each node has different influence parameters corresponding to the transmission delay. As shown in Table 2 below (different UEs can have different sample data):

**Table 2**

| | UE | AS | NWDAF | Tag |
|---|---|---|---|---|
| UE-a (Sample data 1) | Speed 100km/h, quantity of electricity 50% | Video compression bit rate *a* | GBR=40mbps | User experience level =A |
| UE-b (Sample data 2) | Speed 200km/h, quantity of electricity 70% | Video compression bit rate b | GBR=50mbps | User experience level =B |
| UE-c (Sample data 3) | Speed 300km/h, quantity of electricity 20% | Video compression bit rate c | GBR=30mbps | User experience level =A |
| ...... | ...... | ...... | ...... | ...... |
| UE-n (Sample data n) | Speed 250km/h, quantity of electricity 10% | Video compression bit rate c | GBR=20mbps | User experience level =C |

It is assumed that the federated model y=*a*1x1+*a*2x2+*a*3x3+*a*4x4, y is the calculation result, x1 and x2 are the speed and value of quantity of electricity of the UE, x3 is the video compression code rate being used by the AS, and x4 is the GBR value assigned by the core network to the UE. And the tag yt is used to calculate the error loss with y calculated by the federated model.

Due to the data confidentiality requirement, the sample data of the UE and NWDAF cannot be sent to the AF (the AF can only obtain data from the core network). For each set of sample data, the UE calculates *a*1x1+*a*2x2 locally, and the NWDAF calculates *a*4x4 locally, and then they send the respective calculation results to the AF. The AF may aggregate to obtain the value of the calculation result y=*a*1x1+*a*2x2+*a*3x3+*a*4x4, and compare the calculation result with the tag yt to calculate the error loss, and then the AF returns the error loss to each node to calculate the gradient of the weight *a* in each sub model as the error loss, thereby adjusting the weight *a*. In this way, one or more sets of sample data are used for calculation according to this method, and the gradient is continuously calculated to adjust the weight *a*, so as to obtain the final federated model y=*a*1x1+*a*2x2+*a*3x3+*a*4x4.

Illustratively as shown in FIG. 10, the method includes the following steps.

In **step 1:** the AF sends the model information of the sub-model and the demand information of the local data to the UE and the NWDAF respectively.

As the owner of the tag, AF sends a federated learning request to UE and NWDAF respectively. The federated learning request contains the model information of the sub-model and the demand information of local data.

Exemplarily, the model information of the sub-model includes: a model to be calculated by the current node, which may be a simple linear relationship model, or a more complex multi-layer neural network model, such as Deep Neural Networks (DNN).

Exemplarily, the demand information of local data (also called input parameter information) includes: a parameter that the current node needs to input, for example, for the *a*1x1+*a*2x2 model sent to the UE, x1 and x2 are two input parameters, corresponding to the speed and value of quantity of electricity that can be collected on the UE side.

The AF may send the first federated learning request to the terminal through the application layer connection of the user plane, and the application layer connection of the user plane may be an HTTP connection.

In **step 2:** UE and NWDAF send the calculation result to AF.

The UE and the NWDAF calculate and obtain the calculation results (*a*1x1+*a*2x2 and *a*4×4) according to their respective models and input parameters, and send them to the AF.

In **step 3:** the AF sends an error loss to UE and NWDAF respectively.

The AF calculates the local calculation result *a*3x3 according to its own local data and the locally deployed sub-model, adds the results obtained from the three calculation results to obtain y=*a*1x1+*a*2x2+*a*3x3+*a*4x4, calculates the error loss using the comparison between y and yt, and then sends the error loss to UE and NWDAF.

In **step 4:** the UE calculates the gradient of the model parameter on the UE side according to the error loss, and then updates the weights *a1* and *a2*; the AF calculates the gradient of the model parameter on the AF side according to the error loss, and then updates the weight *a3*; the NWDAF calculates the gradient of the model parameter on the NWDAF side according to the error loss, and then updates the weight *a4.*

Each node calculates the gradient by itself, and then updates the value of its own weight *a*. This completes one iterative calculation. After several iterative calculations, the trained sub-model is obtained.

**For the case where the first node includes a UE:**

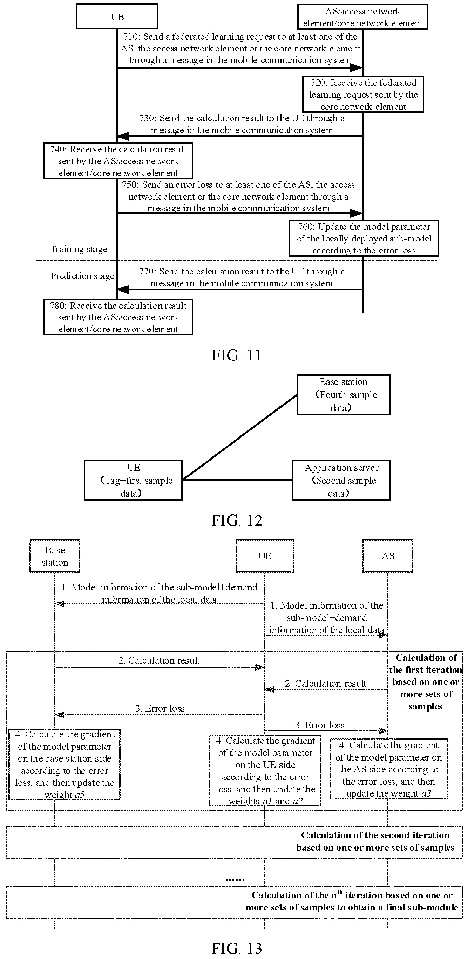

FIG. 11 shows a flowchart of a federated learning method applied to a mobile communication system provided by an exemplary embodiment of the present application. The method includes the following steps.

**The training stage of the federated model**:
In **step 710**: the UE sends a federated learning request to at least one of the AS, the access network element or the core network element through a message in the mobile communication system.

In the case where the second node includes the AS, the UE sends a third federated learning request to the AS through the application layer connection of the user plane, and the third federated learning request carries the model information of the sub-model on the AS side, and/or the demand information of local data on the AS side.

In the case where the second node includes an access network element, the UE sends a second federated learning request to the access network element through a Signaling Radio Bearer (SRB) or a Data Radio Bearer (DRB), and the second federated learning request carries the model information of the sub-model on the access network element side, and/or the demand information of local data on the access network element side.

In the case where the second node includes a core network element, the UE sends a fourth federated learning request to the core network element through a NAS message or a user plane message, and the fourth federated learning request carries the model information of the sub-model on the core network element side, and/or demand information of local data on the core network element side.

In **step 720:** the AS/access network element/core network element receives the federated learning request sent by the UE through a message in the mobile communication system.

The AS receives the third federated learning request from the UE through the application layer connection of the user plane, and the third federated learning request carries the model information of the sub-model on the AS side and/or the demand information of the local data on the AS side.

The access network element receives the second federated learning request from the UE through the SRB or the DRB, and the second federated learning request carries the model information of the sub-model on the access network element side, and/or the demand information of local data on the access network element side.

The core network element receives the fourth federated learning request from the UE through the NAS message or the user plane message, and the fourth federated learning request carries the model information of the sub-model on the core network element side, and/or the demand information of local data on the core network element side.

Exemplarily, in the training stage of the federated model, the AS/access network element/core network element obtains the model parameter of the sub-model and/or the demand information of local data from the federated learning request. The AS/access network element/core network element performs federated learning according to the federated learning request. The AS/access network element/core network element constructs the sub-model according to the model parameter of the sub-model, and calculates the local data indicated by the demand information using the sub-model to obtain the calculation result.

In **step 730:** the AS/access network element/core network element sends the calculation result to the UE through a message in the mobile communication system.

The AS sends the third calculation result to the UE through the application layer connection of the user plane, and the third calculation result is obtained by calculating the local data of the AS side by using the sub-model of the AS side.

The access network element sends the second calculation result to the UE through the SRB or the DRB, and the second calculation result is obtained by calculating the local data on the access network element side by using the sub-model on the access network element side.

The core network element sends a fourth calculation result to the UE through the NAS message or the user plane message, and the fourth calculation result is obtained by calculating the local data on the core network element side by using the sub-model on the core network element side.

Exemplarily, in the training stage of the federated model, the AS/access network element/core network element obtains the model parameter of the sub-model and/or the demand information of local data from the federated learning request. The AS/access network element/core network element performs federated learning according to the federated learning request. The AS/access network element/core network element constructs the sub-model according to the model parameter of the sub-model, and calculates the local data indicated by the demand information using the sub-model to obtain the calculation result.

In **step 740:** the UE receives the calculation result sent by the AS/access network element/core network element through a message in the mobile communication system.

The UE receives the third calculation result sent by the AS through the application layer connection of the user plane, and the third calculation result is obtained by calculating the local data of the AS side by using the sub-model of the AS side.

The UE receives the second calculation result sent by the access network element through the SRB or the DRB, and the second calculation result is obtained by calculating the local data on the access network element side by using the sub-model on the access network element side.

The UE receives the fourth calculation result sent by the core network element through the NAS message or the user plane message, and the fourth calculation result is obtained by calculating the local data on the core network element side by using the sub-model on the core network element side.

In **step 750:** the UE sends an error loss to at least one of the AS, the access network element or the core network element through a message in the mobile communication system respectively.

The UE is the owner of the sample tag.

The UE sends the third error loss to the AS through the application layer connection of the user plane, and the third error loss is the error loss of the third calculation result relative to the sample tag.

The UE sends the second error loss to the access network element through the SRB or the DRB, where the second error loss is the error loss of the second calculation result relative to the sample tag.

The UE sends the fourth error loss to the core network element through the NAS message or the user plane message, where the fourth error loss is the error loss of the fourth calculation result relative to the sample tag.

In **step 760:** the AS/access network element/core network element updates the model parameter of the locally deployed sub-model according to the error loss.

The AS updates the model parameter of the locally deployed sub-model according to the third error loss, where the third error loss is the error loss of the third calculation result relative to the sample tag.

The access network element updates the model parameter of the locally deployed sub-model according to the second error loss, where the second error loss is the error loss of the second calculation result relative to the sample tag.

The core network element updates the model parameter of the locally deployed sub-model according to the fourth error loss, where the fourth error loss is the error loss of the fourth calculation result relative to the sample tag.

Optionally, the third node also has its own local data, and the third node is locally deployed with one sub-model in the federated model. The third node trains the sub-model of the third node using the local data of the third node to obtain the local calculation result; the third node calculates the local error loss of the local calculation result relative to the sample tag; the third node updates the model parameter of the sub-model in the third node using the local error loss. That is, the UE trains the sub-model of the UE using the local data of the UE to obtain the local calculation result; the UE calculates the local error loss of the local calculation result relative to the sample tag; the UE updates the model parameter of the sub-model in the UE using the local error loss.

**After one or more update iterations,**
**the inference stage of the federated model:**
In **step 770:** the AS/access network element/core network element sends the calculation result to the UE through a message in the mobile communication system.

After the federated model is trained, the second node performs the prediction process by itself, or the second node performs the prediction process after receiving the federated learning request sent by the third network element.

In the case where the second node includes an AS, the AS sends a third calculation result to the UE through the application layer connection of the user plane, and the third calculation result is obtained by calculating the local data on the AS side by using the sub-model of the AS side.

In the case where the second node includes an access network element, the access network element sends a second calculation result to the UE through the SRB or the DRB, and the second calculation result is obtained by calculating the local data on the access network element side by using the sub-model on the access network element side.

In the case where the second node includes a core network element, the core network element sends a fourth calculation result to the UE through a NAS message or a user plane message, and the fourth calculation result is obtained by calculating the local data on the core network element side by using the sub-model on the core network element side.

In **step 780:** the UE receives the calculation result sent by the AS/access network element/core network element through a message in the mobile communication system.

The UE summarizes the received calculation results to obtain the final calculation result of the federated model, and performs the subsequent operation according to the final calculation result. Optionally, the federated model includes an application-related model.

To sum up, the method provided in this embodiment sends the federated learning request and the calculation result between different nodes in the mobile communication system using the message in the mobile communication system, so that on the premise of guaranteeing data privacy between nodes in different domains, data in different domains are fused through the message in the mobile communication system, and data analysis is performed by using the federated model, thereby improving the data analysis capability of the mobile communication system.

Exemplarily, as shown in FIG. 12, vertical federated learning needs to be performed among the base station, the UE, and the AS. The UE is the tag owner. The UE has the sample tag and the first sample data, the AS has the second sample data, and the base station has the fourth sample data.

Exemplarily, the sample tag owned by the UE is a unique tag of the UE, for example, the computing power provided for a certain service (which can be described by the number of floating-point numbers calculated per second), and each network element has a different influence parameter corresponding to the transmission delay. As shown in Table 3 below:

**Table 3**

| | UE | AS | Base station | Tag |
|---|---|---|---|---|
| Sample data 1 | Speed 100km/h, quantity of electricity 50% | User experience value-*a* | PDB=40mbps | The consumed computing power is 35k/s |
| Sample data 2 | Speed 200km/h, quantity of electricity 70% | User experience value -*a* | PDB=50mbps | The consumed computing power is 20k/s |
| Sample data 3 | Speed 300km/h, quantity of electricity 20% | User experience value -*b* | PDB=30mbps | The consumed computing power is 80k/s |
| ...... | ...... | ...... | ...... | ...... |
| Sample data n | Speed 150km/h, quantity of electricity 20% | User experience value -*c* | PDB=30mbps | The consumed computing power is 40k/s |

It is assumed that the federated model y=*a*1x1+*a*2x2+*a*3x3+*a*5x5, y is the calculation result, x1 and x2 are the speed and value of quantity of electricity of the UE, x3 is the user experience value of the AS, and x5 is the Packet Delay Budget (PDB) on the base station side. And the tag yt is used to calculate the error loss with y calculated by the federated model.

Due to the data confidentiality requirement, the sample data of the base station and AS cannot be sent to the UE (the UE can only obtain data from the core network). For each set of sample data, the base station calculates *a*1x1+*a*2x2 locally, the AS calculates a3x3 locally, and then they send the respective calculation results to the UE. The UE can aggregate to obtain the calculation result, and compare the calculation result with the tag yt to calculate the error loss, and then the UE returns the error loss to each node for calculating the gradient of the weight *a* in each sub-model as the error loss, thereby adjusting the weight *a*. In this way, one or more sets of sample data are used for calculation according to this method, and the gradient is continuously calculated to adjust the weight *a*, so as to obtain the final federated model y=*a*1x1+*a*2x2+*a*3x3+*a*5x5.

As shown in FIG. 13, the method includes the following steps.

In **step 1: t**he UE sends model information of the sub-model and demand information of the local data to the base station and the AS respectively.

As the owner of the tag, the UE sends a federated learning request to the base station and the AS respectively. The federated learning request contains the model information of the sub-model and the demand information of local data.

Exemplarily, the model information of the sub-model includes: a model to be calculated by the current node, which may be a simple linear relationship model, or a more complex multi-layer neural network model, such as Deep Neural Networks (DNN).

Exemplarily, the demand information of local data (also referred to as input parameter information) includes: a parameter that the current node needs to input, for example, for the *a*5x5 model sent to the base station, x5 is the input parameter.

In **step 2:** the base station and the AS send the calculation result to the UE.

The base station and the AS calculate and obtain the calculation results (*a*1x1+*a*2x2 and *a*3x3) according to their respective models and input parameters, and send them to the UE.

In **step 3:** the UE sends an error loss to the base station and AS respectively.

The UE calculates the local calculation result *a5*x5 according to its own local data and the locally deployed sub-model, adds the results obtained from the three calculation results to obtain y=*a*1x1+*a*2x2+*a*3x3+*a*5x5, calculates the error loss using the comparison between y and yt, and then sends the error loss to the base station and AS.

In **step 4:** the UE calculates the gradient of the model parameter on the UE side according to the error loss, and then updates the weights *a1* and *a2;* the AS calculates the gradient of the model parameter on the AS side according to the error loss, and then updates the weight *a3*; the base station calculates the gradient of the model parameter on the base station side according to the error loss, and then updates the weight *a5.*

Each node calculates the gradient by itself, and then updates the value of its own weight *a*. This completes one iterative calculation. After several iterative calculations, the trained sub-model is obtained.

**For the case where the first node includes an access network element:**

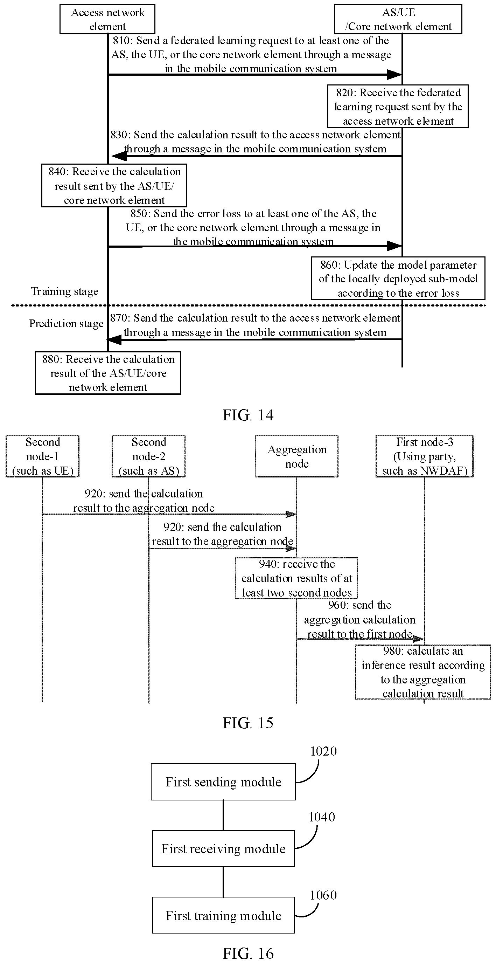

FIG. 14 shows a flowchart of a federated learning method applied to a mobile communication system provided by an exemplary embodiment of the present application. The method includes the following steps.

**The training stage of the federated model:**
In **step 810:** the access network element sends a federated learning request to at least one of the AS, the UE, or the core network element through a message in the mobile communication system.

In the case where the second node includes an AS, the access network element sends a third federated learning request to the AS through the first API interface, and the third federated learning request carries the model information of the sub-model on the AS side, and/or the demand information of local data on the AS side.

In the case where the second node includes the UE, the access network element sends a first federated learning request to the UE through a Signaling Radio Bearer (SRB) or a Data Radio Bearer (DRB), and the first federated learning request carries the model information of the sub-model on the UE side, and/or demand information of local data on the UE side.

In the case where the second node includes a core network element, the access network element sends a fourth federated learning request to the core network element through the first API interface or the user plane connection, and the fourth federated learning request carries the model information of the sub-model on the core network element side, and/or demand information of local data on the core network element side.

In **step 820:** the AS/UE/core network element receives the federated learning request sent by the access network element through a message in the mobile communication system.

The AS receives the third federated learning request from the access network element through the first API interface, and the third federated learning request carries the model information of the sub-model on the AS side and/or the demand information of the local data on the AS side.

The UE receives the first federated learning request from the access network element through the SRB or DRB, and the first federated learning request carries the model information of the sub-model on the UE side and/or the demand information of the local data on the UE side.

The core network element receives the fourth federated learning request from the access network element through the first API interface or the user plane connection, and the fourth federated learning request carries the model information of the sub-model on the core network element side, and/or, the demand information of local data on the core network element side.

Exemplarily, in the training stage of the federated model, the AS/UE/core network element obtains the model parameter of the sub-model and/or the demand information of the local data from the federated learning request. The AS/UE/core network element performs federated learning according to the federated learning request. The AS/UE/core network element constructs the sub-model according to the model parameter of the sub-model, and calculates the local data indicated by the demand information using the sub-model to obtain the calculation result.

In **step 830:** the AS/UE/core network element sends the calculation result to the access network element through a message in the mobile communication system.

The AS sends the third calculation result to the access network element through the first API interface, where the third calculation result is obtained by calculating the local data on the AS side by using the sub-model of the AS side.

The UE sends the first calculation result to the access network element through the SRB or the DRB, and the first calculation result is obtained by calculating the local data on the UE side by using the sub-model on the UE side.

The core network element sends a fourth calculation result to the access network element through the first API interface or the user plane connection, and the fourth calculation result is obtained by calculating the local data on the core network element side using the sub-model on the core network element side.

Exemplarily, in the training stage of the federated model, the AS/UE/core network element obtains the model parameter of the sub-model and/or the demand information of the local data from the federated learning request. The AS/UE/core network element performs federated learning according to the federated learning request. The AS/UE/core network element constructs the sub-model according to the model parameter of the sub-model, and calculates the local data indicated by the demand information using the sub-model to obtain the calculation result.

In **step 840:** the access network element receives the calculation result sent by the AS/UE/core network element through a message in the mobile communication system.

The access network element receives the third calculation result sent by the AS through the first API interface, where the third calculation result is obtained by calculating the local data on the AS side by using the sub-model on the AS side.

The access network element receives the first calculation result sent by the UE through the SRB or the DRB, and the first calculation result is obtained by calculating the local data on the UE side by using the sub-model on the UE side.

The access network element receives the fourth calculation result sent by the core network element through the first API interface or the user plane connection, and the fourth calculation result is obtained by calculating the local data on the core network element side using the sub-model on the core network element side.

In **step 850:** the access network element sends the error loss to at least one of the AS, the UE, or the core network element through a message in the mobile communication system.

The access network element is the owner of the sample tag.

The access network element sends the third error loss to the AS through the first API interface, where the third error loss is the error loss of the third calculation result relative to the sample tag.

The access network element sends the first error loss to the UE through the SRB or the DRB, where the first error loss is the error loss of the first calculation result relative to the sample tag.

The access network element sends the fourth error loss to the core network element through the first API interface or the user plane connection, where the fourth error loss is the error loss of the fourth calculation result relative to the sample tag.

In **step 860:** the AS/UE/core network element updates the model parameter of the locally deployed sub-model according to the error loss.

The AS updates the model parameter of the locally deployed sub-model according to the third error loss, where the third error loss is the error loss of the third calculation result relative to the sample tag.

The UE updates the model parameter of the locally deployed sub-model according to the first error loss, where the first error loss is the error loss of the first calculation result relative to the sample tag.

The core network element updates the model parameter of the locally deployed sub-model according to the fourth error loss, where the fourth error loss is the error loss of the fourth calculation result relative to the sample tag.

Optionally, the third node also has its own local data, and the third node is locally deployed with one sub-model in the federated model. The third node trains the sub-model of the third node using the local data of the third node to obtain the local calculation result; the third node calculates the local error loss of the local calculation result relative to the sample tag; the third node updates the model parameter of the sub-model in the third node using the local error loss. That is, the access network element trains the sub-model of the access network element using the local data of the access network element to obtain the local calculation result; the access network element calculates the local error loss of the local calculation result relative to the sample tag; the network element updates the model parameter of the sub-model in the access network element using the local error loss.

**After one or more update iterations,**
**the inference stage of the federated model:**
In **step 870:** the AS/UE/core network element sends the calculation result to the access network element through a message in the mobile communication system.

After the federated model is trained, the second node performs the prediction process by itself, or the second node performs the prediction process after receiving the federated learning request sent by the third network element.

In the case where the second node includes an AS, the AS sends a third calculation result to the access network element through the first API interface, where the third calculation result is obtained by calculating the local data on the AS side by using the sub-model on the AS side.

In the case where the second node includes the UE, the UE sends the first calculation result to the access network element through the SRB or the DRB, and the first calculation result is obtained by calculating the local data on the UE side by using the sub-model on the UE side.

In the case where the second node includes a core network element, the core network element sends a fourth calculation result to the access network element through the first API interface or the user plane connection, and the fourth calculation result is obtained by calculating the local data on the core network element side using the sub-model on the core network element side.

In **step 880:** the access network element receives the calculation result sent by the AS/UE/core network element through a message in the mobile communication system.

The access network element summarizes the received calculation results to obtain the final calculation result of the federated model, and performs the subsequent operation according to the final calculation result. Optionally, the federated model includes an application-related model.

To sum up, the method provided in this embodiment sends the federated learning request and the calculation result between different nodes in the mobile communication system using the message in the mobile communication system, so that on the premise of guaranteeing data privacy between nodes in different domains, data in different domains are fused through the message in the mobile communication system, and data analysis is performed by using the federated model, thereby improving the data analysis capability of the mobile communication system.

In the inference stage of the federated model, in order to protect the data privacy of each second node, an aggregation node can also be introduced to aggregate the calculation results of each second node and then submit it to the first node.

FIG. 15 shows a flowchart of a federated learning method applied in a mobile communication system provided by another exemplary embodiment of the present application. The method includes the following steps.

In **step 920:** the second node sends the calculation result to the aggregation node, the second node is a node with local data in the mobile communication system, the second node is locally deployed with one sub-model in the federated model, and the calculation result is obtained by calculating the local data of the second node using the sub-model in the second node.

In **step 940:** the aggregation node receives the calculation results of at least two second nodes in the mobile communication system.

In **step 960:** the aggregation node sends the aggregation calculation result to the first node in the mobile communication system, and the aggregation calculation result is obtained by aggregation of the calculation results of at least two second nodes.

The first node receives the aggregation calculation result sent by the aggregation node.

In **step 980:** the first node calculates an inference result according to the aggregation calculation result.

The aggregation node is at least one type of a terminal, an access network element, a core network element or an application server; the first node is at least one type of the terminal, the access network element, the core network element or the application server; the second node is at least one type of the terminal, the access network element, the core network element or the application server; where the first node and the second node are of different types.

Exemplarily, the types of the aggregation node and the first node may be the same or different, and the types of the aggregation node and the second node may be the same or different. Exemplarily, different nodes communicate through a message in the mobile communication system, and for specific message types, reference may be made to the foregoing embodiments.

To sum up, in the method provided in this embodiment, the aggregation node first aggregates the calculation results to obtain the aggregation calculation result, and then transmits the aggregation calculation result to the first node. Since the first node cannot know which nodes the aggregation calculation result comes from, the privacy and security of the local data of each second node is guaranteed, and the risk of leakage of the local data of the second node to the first node is avoided.

FIG. 16 shows a block diagram of a federated learning apparatus applied in a mobile communication system provided by an exemplary embodiment of the present application. The apparatus includes:
a first sending module 1020, configured to send a federated learning request to a second node through a message in the mobile communication system, where the second node is a node with local data in the mobile communication system, and the second node is locally deployed with one sub-model in a federated model;
a first receiving module 1040, configured to receive a calculation result of the second node through a message in the mobile communication system, where the calculation result is obtained by calculating the local data by the second node using the sub-model;
where the apparatus is applied to at least one of a terminal, an access network element, a core network element, or an application server, the second node is at least one of the terminal, the access network element, the core network element or the application server, and a type of the network element applied by the apparatus and a type of the second node are different.

In an optional design of this embodiment, the federated learning request carries model information of the sub-model.

In an optional design of this embodiment, the federated learning request carries demand information of the local data.

In an optional design of this embodiment, the apparatus is applied to a core network element;
the first sending module 1020 is configured to perform at least one of the following steps:
sending a first federated learning request to the terminal through a non-access stratum message or a user plane message;
sending a second federated learning request to the access network element through an NG2 message or an NG3 message;
sending a third federated learning request to the application server through a first application programming interface (API) or a user plane connection.

In an optional design of this embodiment, the federation model includes a model related to QoS information.

In an optional design of this embodiment, the apparatus is applied to an application server;
the first sending module 1020 is configured to perform at least one of the following steps:
sending a fourth federated learning request to the core network element through the first application programming interface (API) or the user plane connection;
sending a second federated learning request to the access network element through a second API;
sending a first federated learning request to the terminal through an application layer connection of a user plane.

In an optional design of this embodiment, the federated model includes an application-related model.

In an optional design of this embodiment, the apparatus is applied to the terminal;
the first sending module 1020 is configured to perform at least one of the following steps:
sending a fourth federated learning request to the core network element through a non-access stratum message or a user plane message;
sending a second federated learning request to the access network element through a signaling radio bearer or a data radio bearer;
sending a third federated learning request to the application server through an application layer connection of a user plane.

In an optional design of this embodiment, the federated model includes a model related to terminal performance.

In an optional design of this embodiment, the apparatus is applied to the access network element;
the first sending module 1020 is configured to perform at least one of the following steps:
sending a first federated learning request to the terminal through a signaling radio bearer or a data radio bearer;
sending a fourth federated learning request to the core network element through an NG2 message or an NG3 message;
sending a third federated learning request to the application server through a second application programming interface (API).

In an optional design of this embodiment, the federated model includes a model related to air interface performance.

In an optional design of this embodiment, the apparatus has a sample tag;
the first sending module 1020 is configured to send an error loss to the second node, where the error loss is a loss of the calculation result relative to the sample tag, and the error loss is used for updating the model parameter of the sub-model in the second node.

In an optional design of this embodiment, one sub-model in the federation model is deployed in the apparatus, and the apparatus further includes:
a first training module 1060, configured to calculate the local data in the apparatus using the sub-model in the apparatus to obtain a local calculation result; calculate a local error loss of the local calculation result relative to the sample tag; update the model parameter of the sub-model in the apparatus using the local error loss.

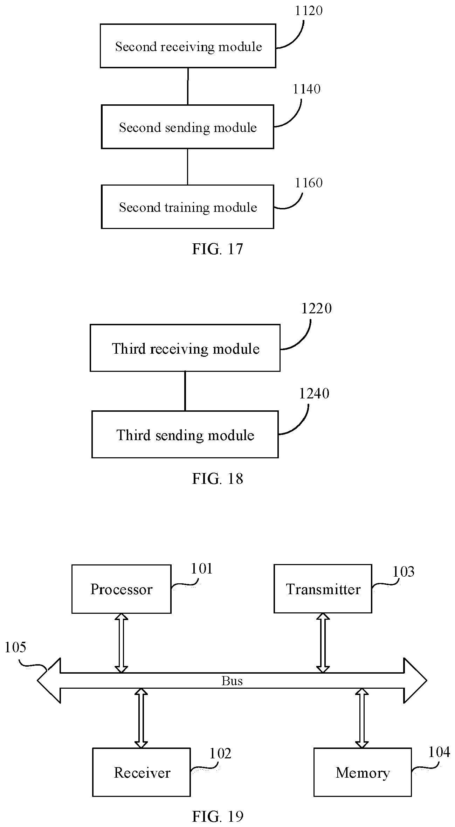

FIG. 17 shows a block diagram of a federated learning apparatus applied in a mobile communication system provided by an exemplary embodiment of the present application.

The second receiving module 1120 is configured to receive a federated learning request sent by a first node through a message in the mobile communication system, where the second node is a node with local data in the mobile communication system, and the second node is deployed locally with one sub-model in a federated model.

The second sending module 1140 is configured to send a calculation result to the first node through a message in the mobile communication system, where the calculation result is obtained by calculating the local data by the second node using the sub-model.

The first node is at least one of a terminal, an access network element, a core network element, or an application server, the apparatus is applied to at least one of the terminal, the access network element, the core network element or the application server, and the types of the first node and the network element applied by the apparatus are different.

In an optional design of this embodiment, the federated learning request carries model information of the sub-model.

In an optional design of this embodiment, the federated learning request carries demand information of the local data.

In an optional design of this embodiment, the apparatus is applied to the terminal;
the second receiving module 1120 is configured to receive a first federated learning request from a core network element through a non-access stratum message or a user plane message;
or, the second receiving module 1120 is configured to receive the first federated learning request from an access network element through a signaling radio bearer or a data radio bearer;
or, the second receiving module 1120 is configured to receive the first federated learning request from an application server through a application layer connection of a user plane.

In an optional design of this embodiment, the apparatus is applied to the access network element;
the second receiving module 1120 is configured to receive a second federated learning request from the terminal through a signaling radio bearer or a data radio bearer;
or, the second receiving module 1120 is configured to receive the second federated learning request from the core network element through the NG2 message or the NG3 message;
or, the second receiving module 1120 is configured to receive the second federated learning request from the application server through the second application programming interface (API).

In an optional design of this embodiment, the apparatus is applied to the application server;
the second receiving module 1120 is configured to receive a third federated learning request from the core network element through a first application programming interface (API) or a user plane connection;
or, the second receiving module 1120 is configured to receive a third federated learning request from the access network element through a second API;
or, the second receiving module 1120 is configured to receive the third federated learning request from the terminal through the application layer connection of the user plane.

In an optional design of this embodiment, the apparatus is applied to the core network element;
the second receiving module 1120 is configured to receive a fourth federated learning request from the terminal through a non-access stratum message or a user plane message;
or, the second receiving module 1120 is configured to receive the fourth federated learning request sent from the access network element through an NG2 message or an NG3 message;
or, the second receiving module 1120 is configured to receive the fourth federated learning request from the application server through the first application programming interface (API) or the user plane connection.

In an optional design of this embodiment, the first node is a node with a sample tag in the mobile communication system;
the apparatus also includes:
the second receiving module 1120 being further configured to receive an error loss from the first node, where the error loss is a loss of the calculation result relative to the sample tag;
a second training module 1160, configured to update a model parameter of the sub-model in the second node using the error loss.

FIG. 18 shows a block diagram of a federated learning apparatus applied in a mobile communication system provided by an exemplary embodiment of the present application. The apparatus includes:
a third receiving module 1220, configured to receive calculation results of at least two second nodes in the mobile communication system, where the second nodes are nodes with local data in the mobile communication system, the second nodes are locally deployed with one sub-model in the federated model, and the calculation result is obtained by calculating the local data of the second node using the sub-model in the second node;
a third sending module 1240, configured to send an aggregation calculation result to the first node in the mobile communication system, where the aggregation calculation result is obtained by aggregating the calculation results of the at least two second nodes.

In an optional design of this embodiment, the first node is at least one of the terminal, the access network element, the core network element, or the application server; the second node is at least one of the terminal, the access network element, the core network element or the application server;
where types of the first node and the second node are different.

FIG. 19 shows a schematic structural diagram of a communication device (terminal or access network element or core network element or AS) provided by an exemplary embodiment of the present application. The communication device includes: a processor 101, a receiver 102, a transmitter 103, a memory 104 and a bus 105.

The processor 101 includes one or more processing cores, and the processor 101 executes various functional applications and information processing by running software programs and modules.

The receiver 102 and the transmitter 103 may be implemented as one communication component, which may be one communication chip.

The memory 104 is connected to the processor 101 through the bus 105.

The memory 104 may be configured to store at least one instruction, and the processor 101 may be configured to execute the at least one instruction, so as to implement various steps in the foregoing method embodiments. The transmitter 103 is used to perform the steps related to sending; the receiver 104 is used to perform the steps related to receiving; the processor 101 is used to perform the steps other than sending and receiving.

Additionally, the memory 104 may be implemented by any type or combination of volatile or non-volatile storage devices including, but not limited to, a magnetic or optical disk, an Electrically-Erasable Programmable Read Only Memory (EEPROM), an Erasable Programmable Read Only Memory (EPROM), a Static Random Access Memory (SRAM), a Read-Only Memory (ROM), a magnetic memory, a flash memory, a Programmable Read-Only Memory (PROM).

In an exemplary embodiment, a computer-readable storage medium is also provided, where the computer-readable storage medium stores at least one instruction, at least one section of program, code set or instruction set, the at least one instruction, the at least one section of program, the code set or the instruction set is loaded and executed by the processor to implement the federated learning method applied to the mobile communication system provided by each of the above method embodiments.

In an exemplary embodiment, there is also provided a computer program product or computer program including computer instructions stored in a computer-readable storage medium, a processor of a communication device reads the computer instructions from the computer-readable storage medium, and the processor executes the computer instructions, so that the communication device executes the federated learning method applied to the mobile communication system described in the above aspects.

Those of ordinary skill in the art can understand that all or part of the steps of implementing the above embodiments can be completed by hardware, or can be completed by instructing relevant hardware through a program, and the program can be stored in a computer-readable storage medium. The storage medium mentioned above may be a read-only memory, a magnetic disk or an optical disk, etc.

The above descriptions are only optional embodiments of the present application, and are not intended to limit the present application. Any modifications, equivalent replacements, improvements, etc. made within the spirit and principles of the present application shall be included in the protection scope of the present application.

## Claims

1. A federated learning method applied in a mobile communication system, wherein the method comprises:
sending, by a first node, a federated learning request to a second node through a message in the mobile communication system, wherein the second node is a node with local data in the mobile communication system, and the second node is locally deployed with one sub-model in a federated model; and
receiving, by the first node, a calculation result of the second node through a message in the mobile communication system, wherein the calculation result is obtained by calculating the local data by the second node using the sub-model;
wherein the first node is at least one of a terminal, an access network element, a core network element, or an application server, the second node is at least one of the terminal, the access network element, the core network element or the application server, and types of the first node and the second node are different.

2. The method according to claim 1, wherein the federated learning request carries model information of the sub-model.

3. The method according to claim 1, wherein the federated learning request carries demand information of the local data.

4. The method according to any one of claims 1 to 3, wherein the first node comprises the core network element;
sending, by the first node, the federated learning request to the second node through the message in the mobile communication system, comprises at least one of following steps:
sending, by the core network element, a first federated learning request to the terminal through a non-access stratum message or a user plane message;
sending, by the core network element, a second federated learning request to the access network element through an NG2 message or an NG3 message;
sending, by the core network element, a third federated learning request to the application server through a first application programming interface (API) or a user plane connection.

5. The method according to claim 4, wherein the federated model comprises a model related to QoS information.

6. The method according to any one of claims 1 to 3, wherein the first node comprises an application server;
sending, by the first node, the federated learning request to the second node through the message in the mobile communication system, comprises at least one of following steps:
sending, by the application server, a fourth federated learning request to the core network element through a first application programming interface (API) or a user plane connection;
sending, by the application server, a second federated learning request to the access network element through a second API;
sending, by the application server, a first federated learning request to the terminal through an application layer connection of a user plane.

7. The method according to claim 6, wherein the federated model comprises an application-related model.

8. The method according to any one of claims 1 to 3, wherein the first node comprises the terminal;
sending, by the first node, the federated learning request to the second node through the message in the mobile communication system, comprises at least one of following steps:
sending, by the terminal, a fourth federated learning request to the core network element through a non-access stratum message or a user plane message;
sending, by the terminal, a second federated learning request to the access network element through a signaling radio bearer or a data radio bearer;
sending, by the terminal, a third federated learning request to the application server through an application layer connection of a user plane.

9. The method according to claim 8, wherein the federated model comprises a model related to terminal performance.

10. The method according to any one of claims 1 to 3, wherein the first node comprises the access network element;
sending, by the first node, the federated learning request to the second node through the message in the mobile communication system, comprises at least one of following steps:
sending, by the access network element, a first federated learning request to the terminal through a signaling radio bearer or a data radio bearer;
sending, by the access network element, a fourth federated learning request to the core network element through an NG2 message or an NG3 message;
sending, by the access network element, a third federated learning request to the application server through a second application programming interface (API).

11. The method according to claim 10, wherein the federated model comprises a model related to air interface performance.

12. The method according to any one of claims 1 to 3, wherein the first node is a node with a sample tag in the mobile communication system, and the calculation result is obtained by training the sub-model in the second node using the local data of the second node;
the method further comprises:
sending, by the first node, an error loss to the second node, wherein the error loss is a loss of the calculation result relative to the sample tag, and the error loss is used for updating a model parameter of the sub-model in the second node.

13. The method according to claim 12, wherein the first node is locally deployed with one sub-model in the federated model, and the method further comprises:
calculating, by the first node, the local data of the first node using the sub-model of the first node to obtain a local calculation result;
calculating, by the first node, a local error loss of the local calculation result relative to the sample tag;
updating, by the first node, a model parameter of the sub-model in the first node using the local error loss.

14. A federated learning method applied in a mobile communication system, wherein the method comprises:
receiving, by a second node, a federated learning request sent by a first node through a message in the mobile communication system, wherein the second node is a node with local data in the mobile communication system, and the second node is locally deployed with one sub-model in a federated model; and
sending, by the second node, a calculation result to the first node through a message in the mobile communication system, wherein the calculation result is obtained by calculating the local data by the second node using the sub-model;
wherein the first node is at least one of a terminal, an access network element, a core network element, or an application server, the second node is at least one of the terminal, the access network element, the core network element or the application server, and types of the first node and the second node are different.

15. The method according to claim 14, wherein the federated learning request carries model information of the sub-model.

16. The method according to claim 14, wherein the federated learning request carries demand information of the local data.

17. The method according to any one of claims 14 to 16, wherein the second node comprises the terminal;
receiving, by the second node, the federated learning request sent by the first node through the message in the mobile communication system, comprises:
receiving, by the terminal, a first federated learning request from the core network element through a non-access stratum message or a user plane message;
or, receiving, by the terminal, a first federated learning request from the access network element through a signaling radio bearer or a data radio bearer;
or, receiving, by the terminal, a first federated learning request from the application server through an application layer connection of a user plane.

18. The method according to any one of claims 14 to 16, wherein the second node comprises the access network element;
sending, by the first node, the federated learning request to the second node through the message in the mobile communication system, comprises:
receiving, by the access network element, a second federated learning request from the terminal through a signaling radio bearer or a data radio bearer;
or, receiving, by the access network element, a second federated learning request from the core network element through an NG2 message or an NG3 message;
or, receiving, by the access network element, a second federated learning request from the application server through a second application programming interface (API).

19. The method according to any one of claims 14 to 16, wherein the second node comprises an application server;
receiving, by the second node, the federated learning request sent by the first node through the message in the mobile communication system, comprises:
receiving, by the application server, a third federated learning request from the core network element through a first application programming interface (API) or a user plane connection;
or, receiving, by the application server, a third federated learning request from the access network element through a second API;
or, receiving, by the application server, a third federated learning request from the terminal through an application layer connection of a user plane.

20. The method according to any one of claims 14 to 16, wherein the second node comprises the core network element;
receiving, by the second node, the federated learning request sent by the first node through a message in the mobile communication system, comprises:
receiving, by the core network element, a fourth federated learning request from the terminal through a non-access stratum message or a user plane message;
or, receiving, by the core network element, a fourth federated learning request sent by the access network element through an NG2 message or an NG3 message;
or, receiving, by the core network element, a fourth federated learning request from the application server through a first application programming interface (API) or a user plane connection.

21. The method according to any one of claims 14 to 16, wherein the first node is a node with a sample tag in the mobile communication system;
the method further comprises:
receiving, by the second node, an error loss from the first node, wherein the error loss is a loss of the calculation result relative to the sample tag;
updating, by the second node, a model parameter of the sub-model in the second node using the error loss.

22. A federated learning method applied in a mobile communication system, wherein the method comprises:
receiving, by an aggregation node, calculation results of at least two second nodes in the mobile communication system, wherein the second node is a node with local data in the mobile communication system, the second node is locally deployed with one sub-model in a federated model, and the calculation result is obtained by calculating the local data of the second node using the sub-model in the second node; and
sending, by the aggregation node, an aggregation calculation result to a first node in the mobile communication system, wherein the aggregation calculation result is obtained by aggregating the calculation results of the at least two second nodes.

23. The method according to claim 22, wherein:
the aggregation node is at least one of a terminal, an access network element, a core network element, or an application server;
the first node is at least one of the terminal, the access network element, the core network element or the application server;
the second node is at least one of the terminal, the access network element, the core network element or the application server;
wherein types of the first node and the second node are different.

24. A federated learning apparatus applied in a mobile communication system, wherein the apparatus comprises:
a first sending module, configured to send a federated learning request to a second node through a message in the mobile communication system, wherein the second node is a node with local data in the mobile communication system, and the second node is locally deployed with one sub-model in a federated model;
a first receiving module, configured to receive a calculation result of the second node through a message in the mobile communication system, wherein the calculation result is obtained by calculating the local data by the second node using the sub-model;
wherein the apparatus is applied to at least one of a terminal, an access network element, a core network element, or an application server, the second node is at least one of the terminal, the access network element, the core network element or the application server, and types of a network element applied by the apparatus and the second node are different.

25. The apparatus according to claim 24, wherein the federated learning request carries model information of the sub-model.

26. The apparatus according to claim 24, wherein the federated learning request carries demand information of the local data.

27. The apparatus according to any one of claims 24 to 26, wherein the apparatus is applied to the core network element;
the first sending module is configured to perform at least one of following steps:
sending a first federated learning request to the terminal through a non-access stratum message or a user plane message;
sending a second federated learning request to the access network element through an NG2 message or an NG3 message;
sending a third federated learning request to the application server through a first application programming interface (API) or a user plane connection.

28. The apparatus according to claim 27, wherein the federated model comprises a model related to QoS information.

29. The apparatus according to any one of claims 24 to 26, wherein the apparatus is applied to the application server;
the first sending module is configured to perform at least one of following steps:
sending a fourth federated learning request to the core network element through a first application programming interface (API) or a user plane connection;
sending a second federated learning request to the access network element through a second API;
sending a first federated learning request to the terminal through an application layer connection of a user plane.

30. The apparatus according to claim 29, wherein the federated model comprises an application-related model.

31. The apparatus according to any one of claims 24 to 26, wherein the apparatus is applied to the terminal;
the first sending module is configured to perform at least one of following steps:
sending a fourth federated learning request to the core network element through a non-access stratum message or a user plane message;
sending a second federated learning request to the access network element through a signaling radio bearer or a data radio bearer;
sending a third federated learning request to the application server through an application layer connection of a user plane.

32. The apparatus according to claim 31, wherein the federated model comprises a model related to terminal performance.

33. The apparatus according to any one of claims 24 to 26, wherein the apparatus is applied to the access network element;
the first sending module is configured to perform at least one of following steps:
sending a first federated learning request to the terminal through a signaling radio bearer or a data radio bearer;
sending a fourth federated learning request to the core network element through an NG2 message or an NG3 message;
sending a third federated learning request to the application server through a second application programming interface (API).

34. The apparatus according to claim 33, wherein the federated model comprises a model related to air interface performance.

35. The apparatus according to any one of claims 24 to 26, wherein the apparatus has a sample tag;
the first sending module is configured to send an error loss to the second node, wherein the error loss is a loss of the calculation result relative to the sample tag, and the error loss is used for updating a model parameter of the sub-model in the second node.

36. The apparatus according to claim 35, wherein the apparatus is deployed with one sub-model in the federation model, and the apparatus further comprises:
a first training module, configured to calculate the local data in the apparatus using the sub-model in the apparatus to obtain a local calculation result; calculate a local error loss of the local calculation result relative to the sample tag; update a model parameter of the sub-model in the apparatus using the local error loss.

37. A federated learning apparatus applied in a mobile communication system, wherein the apparatus comprises:
a second receiving module, configured to receive a federated learning request sent by a first node through a message in the mobile communication system, wherein the second node is a node with local data in the mobile communication system, and the second node is locally deployed with one sub-model in a federated model; and
a second sending module, configured to send a calculation result to the first node through a message in the mobile communication system, wherein the calculation result is obtained by calculating the local data by the second node using the sub-model;
wherein the first node is at least one of a terminal, an access network element, a core network element, or an application server, the apparatus is applied to at least one of the terminal, the access network element, and the core network element or the application server, and types of the first node and a network element applied by the apparatus are different.

38. The apparatus according to claim 37, wherein the federated learning request carries model information of the sub-model.

39. The apparatus according to claim 37, wherein the federated learning request carries demand information of the local data.

40. The apparatus according to any one of claims 37 to 39, wherein the apparatus is applied to the terminal;
the second receiving module is configured to receive a first federated learning request from the core network element through a non-access stratum message or a user plane message;
or, the second receiving module is configured to receive a first federated learning request from the access network element through a signaling radio bearer or a data radio bearer;
or, the second receiving module is configured to receive a first federated learning request from the application server through an application layer connection of a user plane.

41. The apparatus according to any one of claims 37 to 39, wherein the apparatus is applied to the access network element;
the second receiving module is configured to receive a second federated learning request from the terminal through a signaling radio bearer or a data radio bearer;
or, the second receiving module is configured to receive a second federated learning request from the core network element through an NG2 message or an NG3 message;
or, the second receiving module is configured to receive a second federated learning request from the application server through a second application programming interface (API).

42. The apparatus according to any one of claims 37 to 39, wherein the apparatus is applied to the application server;
the second receiving module is configured to receive a third federated learning request from the core network element through a first application programming interface (API) or a user plane connection;
or, the second receiving module is configured to receive a third federated learning request from the access network element through a second API;
or, the second receiving module is configured to receive a third federated learning request from the terminal through an application layer connection of a user plane.

43. The apparatus according to any one of claims 37 to 39, wherein the apparatus is applied to the core network element;
the second receiving module is configured to receive a fourth federated learning request from the terminal through a non-access stratum message or a user plane message;
or, the second receiving module is configured to receive a fourth federated learning request sent from the access network element through an NG2 message or an NG3 message;
or, the second receiving module is configured to receive a fourth federated learning request from the application server through a first application programming interface (API) or a user plane connection.

44. The apparatus according to any one of claims 37 to 39, wherein the first node is a node with a sample tag in the mobile communication system;
the apparatus further comprises:
the second receiving module being further configured to receive an error loss from the first node, wherein the error loss is a loss of the calculation result relative to the sample tag;
a second training module, configured to update a model parameter of the sub-model in the second node using the error loss.

45. A federated learning apparatus applied in a mobile communication system, wherein the apparatus comprises:
a third receiving module, configured to receive calculation results of at least two second nodes in the mobile communication system, wherein the second node is a node with local data in the mobile communication system, the second node is locally deployed with one sub-model in a federated model, and the calculation result is obtained by calculating the local data of the second node using the sub-model in the second node; and
a third sending module, configured to send an aggregation calculation result to a first node in the mobile communication system, wherein the aggregation calculation result is obtained by aggregating the calculation results of the at least two second nodes.

46. The apparatus according to claim 22, wherein the first node is at least one of the terminal, the access network element, the core network element, or the application server; the second node is at least one of the terminal, the access network element, the core network element or the application server;
wherein types of the first node and the second node are different.

47. A terminal, comprising:
a processor;
a transceiver connected to the processor;
a memory for storing executable instructions for the processor;
wherein the processor is configured to load and execute the executable instructions to implement the method according to any one of claims 1-23.

48. A network element device, comprising:
a processor;
a transceiver connected to the processor;
a memory for storing executable instructions for the processor;
wherein the processor is configured to load and execute the executable instructions to implement the method according to any one of claims 1-23.

49. A computer-readable storage medium, wherein executable instructions are stored in the readable storage medium, and the executable instructions are loaded and executed by a processor to implement the method according to any one of claims 1-23.
